# EUROPEAN PATENT APPLICATION

(11) **EP 4 412 030 A1**
(43) Date of publication of application: **07.08.2024**
(21) Application number: 23804565.2
(22) Date of filing: 25.10.2023
(51) Int. Cl.: H02J 7/00, H01M 10/44, H02J 50/10

(54) **ELECTRONIC DEVICE AND OPERATING METHOD OF ELECTRONIC DEVICE**

(30) Priority: 13.12.2022 KR 20220173317; 03.01.2023 KR 20230000876; 24.10.2023 KR 20230142757
(71) Applicant: Samsung Electronics Co., Ltd., Suwon-si, Gyeonggi-do 16677 (KR)
(72) Inventor: ZACHARIADES, Antonios, Suwon-si, Gyeonggi-do 16677 (KR); SIN, Dongik, Suwon-si, Gyeonggi-do 16677 (KR); OH, Hyunjun, Suwon-si, Gyeonggi-do 16677 (KR); KIM, Sungyong, Suwon-si, Gyeonggi-do 16677 (KR)
(74) Representative: Gulde & Partner
(86) International application number: PCT/KR2023/016650
(87) International publication number: WO 2024/128527

(57) **Abstract**

An electronic device includes a memory storing a program including instructions, a battery, a charger configured to charge the battery, a power circuit configured to provide power to the charger, and controller. The instructions, when executed by the controller, cause the electronic device to identify a first input current and a first input voltage to be input into the charger, based on information on a target charging power for the battery. The instructions, when executed by the controller, cause the electronic device to control the power circuit such that, based on power provided from an external device, the first input voltage and the first input current are provided to the charger. The instructions, when executed by the controller, cause the electronic device to control the charger to provide charging power corresponding to the target charging power to the battery based on power provided from the power circuit. The instructions, when executed by the controller, cause the electronic device to, while the battery is charged based on the charging power provided from the charger, provide, based on identifying a decrease of an input voltage of the charger to a reference voltage or lower, a request to the external device for increasing the input voltage of the charger to a voltage greater than the first input voltage.

## Description

### [Technical Field]

Embodiments of the disclosure relates to an electronic device and a method of operating the electronic device.

### [Background Art]

An electronic device, such as a smartphone, has a wired charging port and a wireless charging port, and receives power through each port to charge a battery and receive power from the battery to supply power to an external device through each port according to an operation condition. Accordingly, a control scheme for stably charging a battery of an electronic device using power supplied from the outside is needed.

### [Detailed Description of the Invention]

### [Technical Solution]

According to an embodiment, an electronic device includes a memory storing a program including instructions, a battery, a charger configured to charge the battery, a power circuit configured to provide power to the charger, and controller. The instructions, when executed by the controller, cause the electronic device to identify a first input current and a first input voltage to be input into the charger, based on information on a target charging power for the battery. The instructions, when executed by the controller, cause the electronic device to control the power circuit such that, based on power provided from an external device, the first input voltage and the first input current are provided to the charger. The instructions, when executed by the controller, cause the electronic device to control the charger to provide charging power corresponding to the target charging power to the battery based on power provided from the power circuit. The instructions, when executed by the controller, cause the electronic device to, while the battery is charged based on the charging power provided from the charger, provide, based on identifying a decrease of an input voltage of the charger to a reference voltage or lower, a request to the external device for increasing the input voltage of the charger to a voltage greater than the first input voltage.

According to an embodiment, a method of operating an electronic device includes identifying a first input current and a first input voltage to be input into a charger of the electronic device, based on information on a target charging power for a battery of the electronic device. The method includes controlling the power circuit such that, based on power provided from an external device, the first input voltage and the first input current are provided to the charger. The method includes controlling the charger to provide charging power corresponding to the target charging power to the battery based on power provided from the power circuit. The method includes, while the battery is charged based on the charging power provided from the charger, providing, based on identifying a decrease of an input voltage of the charger to a reference voltage or lower, a request to the external device for increasing the input voltage of the charger to a voltage greater than the first input voltage.

According to an embodiment, a computer-readable recording medium storing instructions causing the controller of the electronic device to perform at least one operation is provided. The at least one operation includes identifying a first input current and a first input voltage to be input into a charger of the electronic device, based on information on a target charging power for a battery of the electronic device. The at least one operation includes controlling the power circuit such that, based on power provided from an external device, the first input voltage and the first input current are provided to the charger. The at least one operation includes controlling the charger to provide charging power corresponding to the target charging power to the battery based on power provided from the power circuit. The at least one operation includes, while the battery is charged based on the charging power provided from the charger, providing, based on identifying a decrease of an input voltage of the charger to a reference voltage or lower, a request to the external device for increasing the input voltage of the charger to a voltage greater than the first input voltage.

### [Brief Description of Drawings]

FIG. 1 is a block diagram illustrating an electronic device within a network environment according to an embodiment.
FIG. 2 illustrates a charging environment of the electronic device according to an embodiment.
FIG. 3 is a block diagram illustrating the electronic device according to an embodiment.
FIG. 4 is a flowchart illustrating a method of operating the electronic device according to an embodiment.
FIG. 5 is a flowchart illustrating a method of operating the electronic device according to an embodiment.
FIG. 6 illustrates an operation of the electronic device according to an embodiment.
FIG. 7a is a flowchart illustrating a method of operating the electronic device according to an embodiment.
FIG. 7b illustrates an operation of the electronic device according to an embodiment.

### [Mode for Carrying out the Invention]

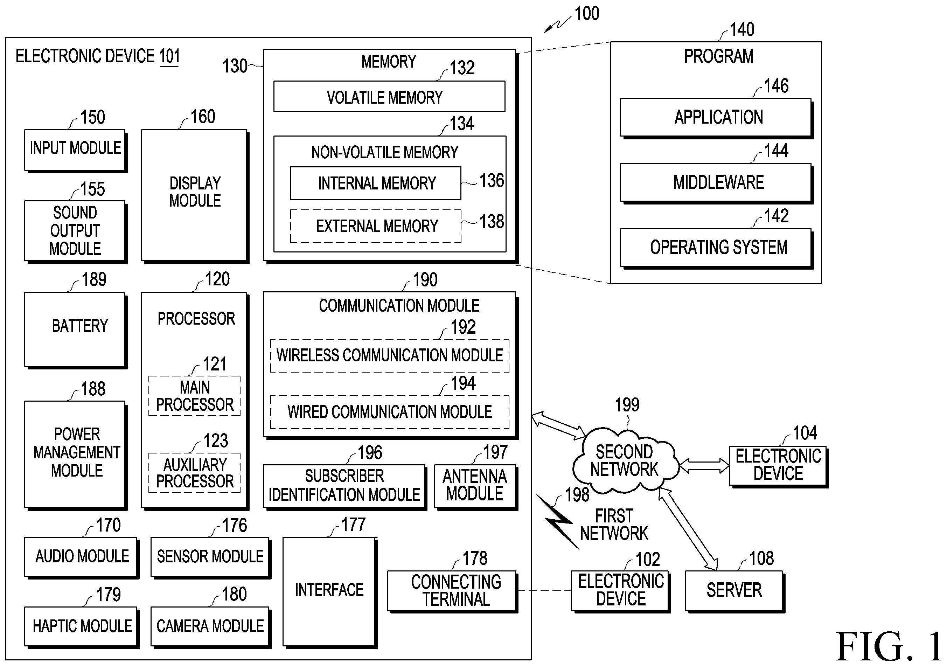

FIG. 1 is a block diagram illustrating an electronic device in a network environment according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

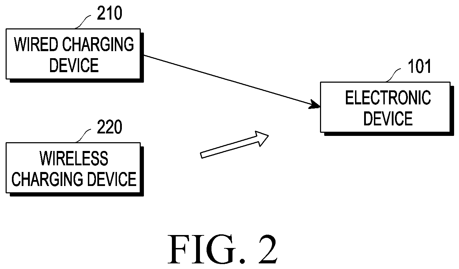

FIG. 2 illustrates a charging environment of an electronic device according to an embodiment.

Referring to FIG. 2, the electronic device 101 may acquire power from external devices (for example, 210 and 220). The electronic device 101 may charge power from the external devices (for example, 210 and 220). The electronic device 101 may charge the battery 189 by using the power acquired from the external devices (for example, 210 and 220). For example, the electronic device 101 may wiredly acquire power from the wired charging device 210. The electronic device 101 may be wiredly connected to the wired charging device 210 and receive power from the wired charging device 210 through an inserted power transmission line. For example, the electronic device 101 may wirelessly receive power from the wireless charging device 220. The electronic device 101 may receive power from the wireless charging device 220 according to one of a resonant scheme, an inductive scheme, or an electromagnetic scheme, and there is no limit in a wireless power reception scheme. The electronic device 101 may store the received power in the battery 189 or use the same for operation.

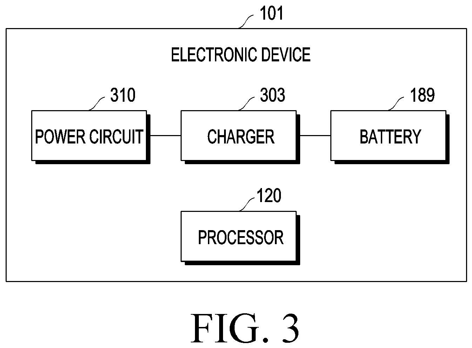

FIG. 3 is a block diagram illustrating an electronic device according to an embodiment.

An illustrative configuration of the electronic device 101 may be described with reference to FIG. 3.

Referring to FIG. 3, the electronic device 101 may include a power circuit 310, a charger 303, the battery 189, and the processor 120 (e.g., controller).

In this document, the performance of a specific operation by the electronic device 101 (or a specific element of the electronic device 101) may be, for example, the performance of the specific operation or the control of other hardware to perform the specific operation by the processor 120 (e.g., controller) included in the electronic device 101. Alternatively, the performance of a specific operation by the electronic device 101 may be, for example, the performance of the specific operation by the processor 120 (e.g., controller) or the performance of the specific operation by other hardware according to execution of instructions stored in the memory 130 included in the electronic device 101. There are no restrictions on how the processor 120 (e.g., controller) may be implemented.

According to an embodiment, the power circuit 310 may provide power to the charger 303. The power circuit 310 may provide power to the charger 303 on the basis of power received from an external device (for example, the wired charging device 210 or the wireless charging device 220 of FIG. 2). The power circuit 310 may include at least one of a wired power reception circuit or a wireless power reception circuit. The wired power reception circuit may be a circuit for wiredly receiving power from the outside (for example, the wired charging device 210 of FIG. 2). For example, the wired power reception circuit may include a power port electrically connected to the wired charging device 210 (or a wired cable). For example, the wired power reception circuit may include a controller configured to communicate with an external device (e.g., the wired charging device 210 of FIG. 2) and control power from the external device (e.g., the wired charging device 210 of FIG. 2). The wireless power reception circuit may be a circuit for wirelessly receiving power from the outside (for example, the wireless charging device 220 of FIG. 2). For example, the wireless power reception circuit may include a power coil for receiving power and a rectification circuit for rectifying the received power.

According to an embodiment, the charger 303 may receive power from the power circuit 310. The charger 303 may provide power (for example, charging power) to the battery 189 on the basis of the power provided from the power circuit 310. The charger 303 may convert power provided from the power circuit 310 and provide the converted power to the battery 189. The charger 303 is a component (e.g., a circuit) configured to provide power to the battery 189, and there are no limitations on how the circuit of the charger 303 may be configured. An "input current" may be a current input from the power circuit 310 to the charger 303. An "input voltage" may be a voltage of power provided from the power circuit 310 to the charger 303. An "output current" may be a current output from the charger 303 to the battery 189. An "output voltage" may be a voltage of power provided from the charger 303 to the battery 189. The processor 120 may identify the input current, the input voltage, the output current, and the output voltage. The processor 120 may identify the voltage of the battery 189. The battery 189 may be charged by the power provided from the charger 303. For example, a component (e.g., programs) configured to measure the input current, the input voltage, the output current, the output voltage, and/or the battery voltage may be included in the processor 120. For example, a component (e.g., a circuit or program) configured to measure the input current, the input voltage, the output current, the output voltage, and/or the battery voltage may be configured independently of processor 120.

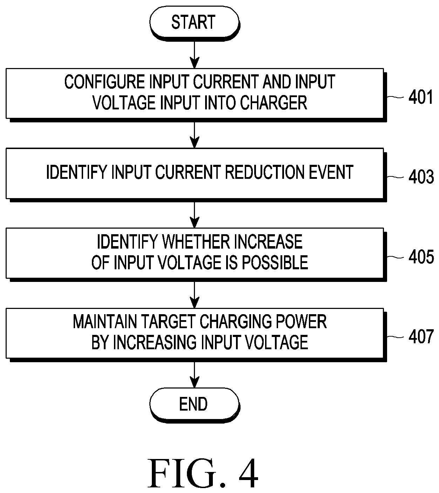

FIG. 4 is a flowchart illustrating a method of operating the electronic device according to an embodiment.

The order of the operations in FIG. 4 may be changed. Operations other than the operations in FIG. 4 may be performed before, during, or after the operations of FIG. 4.

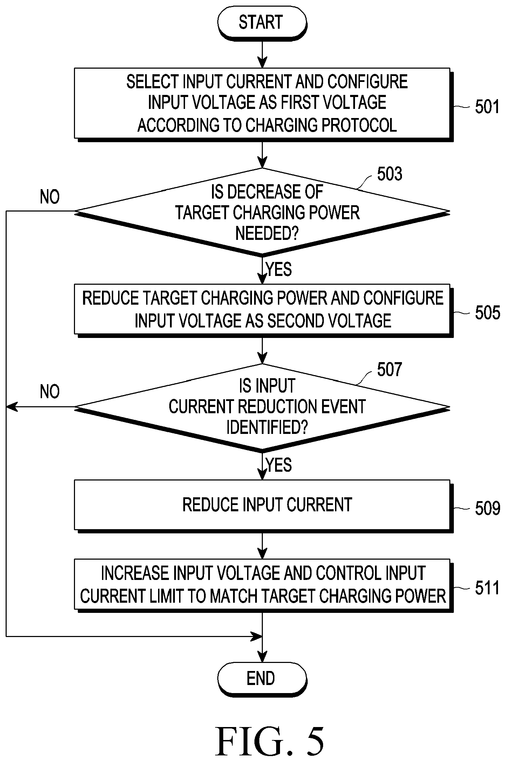

Referring to FIG. 4, in operation 401, according to an embodiment, the electronic device 101 (for example, the processor 120) identifies an input current and/or an input voltage input into the charger 303. The electronic device 101 may identify the size of the input current and/or the size of the input voltage. For example, the electronic device 101 may identify an input current and/or an input voltage to be input into the charger 303. The electronic device 101 identifies an input current and an input voltage input into the charger 303 on the basis of a target charging power for the battery 189. The target charging power may be specifications (e.g., a target value) of power for charging the battery 189. The target charging power may be a target value of power (e.g., charging voltage and/or charging current) for charging the battery 189. The electronic device 101 may charge the battery 189 based on the target charging power. For example, the electronic device 101 may identify the target charging power based on the state of the battery 189 (e.g., an internal voltage of the battery 189). For example, the electronic device 101 may identify the target charging power on the basis of a charging protocol. The electronic device 101 may identify the target charging power on the basis of a charging protocol related to power received from an external device (for example, the wired charging device 210 or the wireless charging device 220 of FIG. 2). The charging protocol may be a preset protocol related to the external device (for example, the wired charging device 210 or the wireless charging device 220 of FIG. 2) providing power to the electronic device 101. For example, the charging protocol(e.g., information related to charging) may include at least one of information on the magnitude of input power (e.g., input voltage and/or input current) that may be provided to the electronic device 101 from an external device (e.g., the wired charging device 210 or the wireless charging device 220 of FIG. 2), information on a maximum allowable current of the input current provided to the electronic device 101 from an external device (e.g., the wired charging device 210 of FIG. 2) according to the connection structure between the external device (e.g., the wired charging device 210 of FIG. 2) and the electronic device 101, or information on the magnitude of charging power for charging the battery 189 of the electronic device 101. For example, the charging protocol may be determined according to whether wired charging is performed, whether wireless charging is performed, or according to a charging type (for example, a charging type of an external device (for example, the wired charging device 210 or the wireless charging device 220 of FIG. 2) transmitting power to the electronic device 101). For example, the charging type may include, but is not limited to, a connector type (e.g., Universal Serial Bus (USB) connector type), and a supported format (e.g., USB, USB Power Delivery (PD), Programmable Power Supply (PPS) or Power Data Objective (PDO)). For example, the charging protocol may be identified according to a scheme in which the electronic device 101 receives power from the external device (for example, the wired charging device 210 or the wireless charging device 220 of FIG. 2), and target charging power of the battery 189 may be identified according to the identified charging protocol. The electronic device 101 may identify an input current and an input voltage input into the charger 303 to match the identified target charging power. For example, the input current and/or input voltage input to the charger 303 that is identified in operation 401 may be the input current and/or input voltage of operation 501 of FIG. 5, or the input current and/or input voltage of operation 505 of FIG. 5. According to an embodiment, the electronic device 101 may provide the identified input voltage and the identified input current to the charger 303. According to an embodiment, the electronic device 101 may control the power circuit 310 to provide an input voltage and an input current to the charger 303 based on power provided by an external device (e.g., the wired charging device 210 or wireless charging device 220 of FIG. 2). The electronic device 101 may request the provision of input power from an external device (e.g., the wired charging device 210 or wireless charging device 220 of FIG. 2) to provide the input current and/or input voltage identified in operation 401 to the charger 303. The electronic device 101 may control the charger 303 to provide charging power to the battery 189 based on the identified input voltage and the identified input current.

In operation 403, according to an embodiment, the electronic device 101 (for example, the processor 120) may identify at least one event. The electronic device 101 may identify the at least one event while the battery 189 is charged on the basis of the input voltage and input current identified in operation 401. The at least one event may be an event indicating that a change in the input power (e.g., input voltage and/or input current) of the charger 303 is required. For example, the at least one event may be a triggering event for performing an adaptive input current limit function. For example, the electronic device 101 may perform the adaptive input current limit function according to the identification of the at least one event. The adaptive input current limit function may be a function of controlling an input current limit (e.g., an limit value (e.g., an upper limit) of input current) for the input current input into the charger 303 in order to prevent reduced charging efficiency for charging the battery 189 or stopping of the charging. For example, the at least one event may be an event indicating that an increase in input voltage of the charger 303 is required. For example, in response to identifying the at least one event, the electronic device 101 may increase the input voltage of the charger 303. For example, in response to identifying the at least one event, the electronic device 101 may perform an adaptive input current limit function and/or perform at least one operation to increase the input voltage of the charger 303. For example, the electronic device 101 may identify a temperature of the electronic device 101 (for example, at least one of the elements included in the electronic device 101) and identify the at least one event according to an increase of the temperature to a reference temperature or higher. The temperature may be determined by the electronic device 101 (e.g., an temperature sensor of the electronic device 101). More specifically, the electronic device 101 may measure the temperature of the electronic device 101. The at least one event is not limited to the example related to the reference temperature. For example, the electronic device 101 may identify the at least one event if the input voltage to the charger 303 decreases to be a reference voltage or lower. The at least one event is not limited to the example related to the reference voltage.

In operation 405, according to an embodiment, the electronic device 101 (for example, the processor 120) may identify whether the input voltage of the charger 303 can be increased. For example, the electronic device 101 may identify whether it is possible to increase the input voltage currently being input to the charger 303 (or whether an operation to increase the input voltage currently being input is permitted). The electronic device 101 identifies whether the input voltage of the charger 303 can be increased based on the identification of the at least one event. The electronic device 101 may identify whether the increase of the input voltage is possible on the basis of the charging protocol. The electronic device 101 may identify the charging protocol according to a charging type of the external device (for example, the wired charging device 210 or the wireless charging device 220 of FIG. 2) transmitting power to the electronic device 101 and identify whether the increase of the input voltage of the charger 303 is possible on the basis of the identified charging protocol. The electronic device 101 may identify whether the increase of the input voltage is possible according to specifications of the input voltage of the charger 303 provided by the charging protocol. The electronic device 101 may determine whether an increase of input voltage that may be provided to the electronic device 101 from the external device (e.g., the wired charging device 210 or wireless charging device 220 of FIG. 2) is possible, based on the charging protocol. For example, when the charging protocol provides specifications of the input voltage of the external device (for example, the wired charging device 210 or the wireless charging device 220 of FIG. 2) including a first voltage and a second voltage higher than the first voltage and the current input voltage to the charger 303 is identified as the first voltage, the electronic device 101 may identify that the increase of the input voltage of the charger 303 is possible. For example, the electronic device 101 may identify that an increase in the input voltage of the charger 303 is not possible. For example, in specifications of the input voltage provided by a charging protocol, if the current input voltage to the charger 303 is at a maximum, the electronic device 101 may identify that an increase in the input voltage of the charger 303 is not possible. In this case, operation 407 may be omitted. If the charging protocol allows for different values of the input voltage, the electronic device 101 checks whether a value of the input voltage higher than the current input voltage is possible. For example, if the charger 303 is capable of operating at 5V input voltage and at 9V input voltage, respectively, and if the input voltage is 5V at the time of the detected at least one event, the electronic device then checks whether it is possible to increase the input voltage of the charger 303 to 9V. Of course, the charging protocol may provide specifications for more than a first voltage and a second voltage. Specifications for a third voltage, a fourth voltage, a fifth voltage, and so on may be provided. Operation 405 is optional and may be omitted.

In operation 407, according to an embodiment, the electronic device 101 (for example, the processor 120) may maintain the target charging power by increasing the input voltage of the charger 303. When the increase of the input voltage of the charger 303 is possible, the electronic device 101 increases the input voltage to maintain the target charging power. For example, the electronic device 101 may increase the input voltage to a value higher than a predetermined reference value (for example, a reference voltage designated in accordance with the at least one event). For example, the electronic device 101 may provide a request to an external device (e.g., the wired charging device 210 or wireless charging device 220 of FIG. 2) to increase the input voltage. The electronic device 101 may maintain the target charging power by increasing the input voltage of the charger 303 and by controlling the input current limit (e.g., by decreasing the limit value of the input current) so that the input current matches the target charging power. At this time, when the increase of the input voltage of the charger 303 is not possible, operation 407 may not be performed.

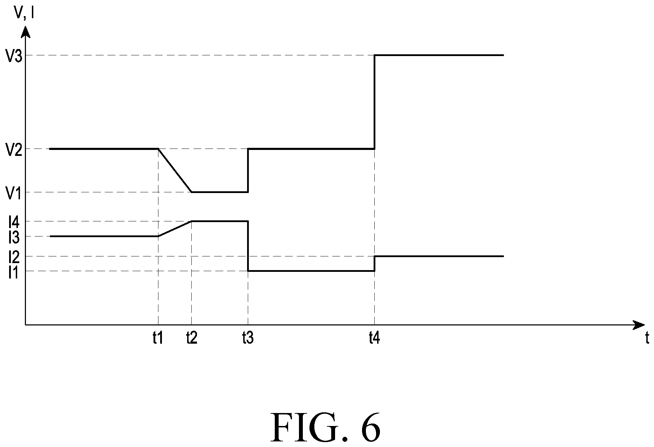

FIG. 5 is a flowchart illustrating a method of operating the electronic device according to an embodiment. FIG. 5 may be described with reference to FIG. 6. FIG. 6 illustrates the operation of the electronic device according to an embodiment.

At least some of the operations in FIG. 5 may be omitted. The order of the operations in FIG. 5 may be changed. Operations other than the operations in FIG. 5 may be performed before, during, or after the operations of FIG. 5. At least some of the operations in FIG. 5 may be the same or similar to at least some of the operations in FIG. 4. The operations in FIG. 5 may be performed organically with the operations in FIG. 4.

Referring to FIG. 5, in operation 501, according to an embodiment, the electronic device 101 (for example, the processor 120) may, according to the charging protocol, select the input current of the charger 303 and identify the input voltage of the charger 303 as a first voltage corresponding to the selected input current. The electronic device 101 may identify the charging protocol related to power received from the external device (for example, the wired charging device 210 or the wireless charging device 220 of FIG. 2), select the input current of the charger 303 on the basis of target charging power corresponding to the identified charging protocol, and identify the input voltage of the charger 303. The electronic device 101 may select the input current of the charger 303 on the basis of first target charging power corresponding to the charging protocol and identify the input voltage of the charger 303 as a first voltage. Operation 501 is at least in part the same as or similar to operation 401 of FIG. 4, and will not be described in detail.

In operation 503, according to an embodiment, the electronic device 101 (for example, the processor 120) may identify whether a decrease of the target charging power is needed. The electronic device 101 may identify whether the decrease of the target charging power is needed for the charging performance of the electronic device 101. The electronic device 101 may identify whether the decrease of the target charging power is needed to prevent stopping of the charging or to limit a rapid decrease of the charging performance, based on the state of the electronic device 101 (e.g., temperature of the electronic device 101, voltage of the battery 189, or charging environment),. Operation 503 is optional and may be omitted.

In operation 505, according to an embodiment, as it is identified that the decrease of the target charging power is needed, the electronic device 101 (for example, the processor 120) may reduce the target charging power from first target charging power to a second target charging power and identify the input voltage of the charger 303 as a second voltage lower than the first voltage (for example, the first voltage in operation 501). For example, referring to FIG. 6, the electronic device 101 may identify the input current (for example, I3 (e.g., 1.2[A]) of FIG. 6) and the input voltage (for example, V2 (e.g., 5[V]) of FIG. 6) on the basis of the target charging power (for example, the second target charging power) according to the charging protocol. In FIG. 6, the electronic device 101 may charge the battery 189 on the basis of the identified input current (for example, I3 of FIG. 6) and the input voltage (for example, V2 of FIG. 6) in operation 505 before t=t1. Operation 505 is optional and may be omitted.

When operation 503 and operation 505 of FIG. 5 are omitted, I3 and V2 of FIG. 6 may be the input current and the input voltage corresponding to the first target charging power in operation 501.

In operation 507, according to an embodiment, the electronic device 101 (for example, the processor 120) identifies, i.e. detects, at least one event (e.g., an event indicating that a change in the input power (e.g., input voltage and/or input current) of the charger 303 is required). Operation 507 is at least in part the same as or similar to operation 403 of FIG. 4, and will not be described in detail. For example, referring to FIG. 6, the electronic device 101 may identify at least one event if the input voltage of the charger 303 falls to a reference voltage (for example, V1 (e.g., 4.6[V]) of FIG. 6) or lower at t=t2. For example, the electronic device 101 may identify that the input voltage of the charger 303 decreases from t=t1 to t=t2, and may identify at least one event based on the input voltage of the charger 303 decreasing below a reference voltage (e.g., V1 in FIG. 6) at t=t2.

In operation 509, according to an embodiment, the electronic device 101 (for example, the processor 120) may reduce the input current of the charger 303 according to the identification of the at least one event. For example, the electronic device 101 may reduce the input current of the charger 303 by controlling the input current limit of the charger 303 according to the identification of the at least one event. For example, referring to FIG. 6, the electronic device 101 may reduce, at t=t3, the input current of the charger 303 from I4 to I1 (e.g., 0.4[A]) according to the identification of the at least one event at t=t2. In FIG. 6, as the input current of the charger 303 is reduced from I4 to 11, the input voltage of the charger 303 may be increased.

In operation 511, according to an embodiment, the electronic device 101 (for example, the processor 120) may increase the input voltage of the charger 303 and control the input current limit so that the input current matches the target charging power. For example, after reducing the input current of the charger 303 according to the identification of the at least one event, the electronic device 101 may increase the input voltage of the charger 303 and control the input current limit so that the input current matches the target charging power. For example, the electronic device 101 may increase the input voltage of the charger 303 and control the input current limit to correspond to the increased input voltage according to the target charging power. For example, after reducing the input current of the charger 303 according to the identification of the at least one event, the electronic device 101 may perform operation 405 and operation 407 of FIG. 4. At this time, when the increase of the input voltage of the charger 303 is not possible, operation 511 may not be performed. For example, referring to FIG. 6, the electronic device 101 may increase the input voltage of the charger 303 from V2 (e.g., 5[V]) to V3 (e.g., 9[V]) at t=t4 and control the input current limit so that the input current becomes I2 (e.g., 0.66[A]). The electronic device 101 may control the input current limit and remove an interrupt associated with at least one event. Accordingly, it is possible to maintain or improve the charging performance of the battery 189 of the electronic device 101. By increasing the input voltage of the charger 303at least one event, and by maintaining the same charging power, the charging performance can be improved. By increasing the input voltage when the input current is decreased because of a detected at least one event, a loss in charging power can be partially offset or entirely avoided. If the input voltage cannot be increased such that the charging power is kept constant, a lower target charging power can be selected, and the input current and the input voltage can be adjusted accordingly.

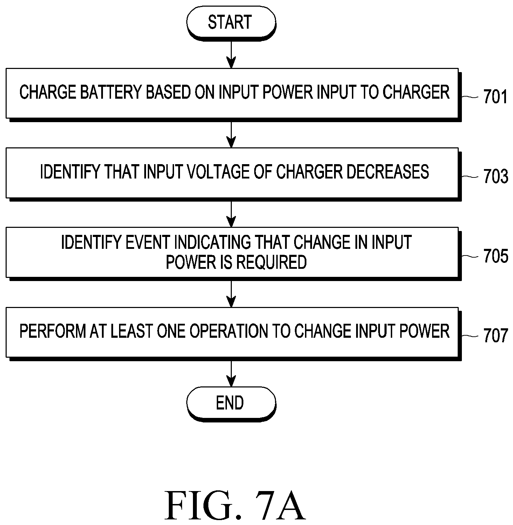

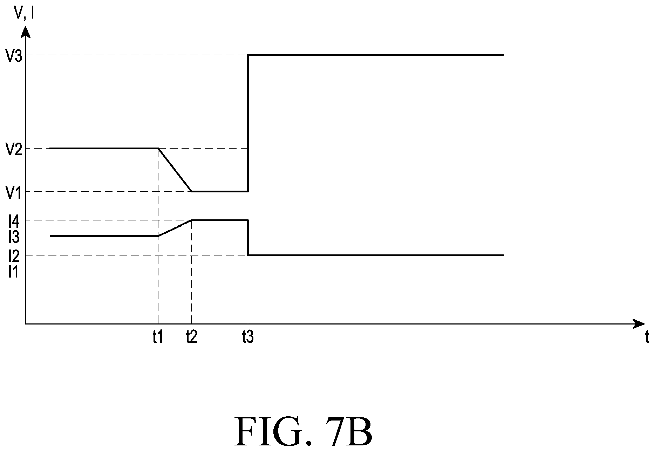

FIG. 7a is a flowchart illustrating a method of operating the electronic device according to an embodiment. FIG. 7a may be described with reference to FIG. 7b. FIG. 7b illustrates an operation of the electronic device according to an embodiment.

At least some of the operations in FIG. 7a may be omitted. The order of the operations in FIG. 7a may be changed. Operations other than the operations in FIG. 7a may be performed before, during, or after the operations of FIG. 7a. At least some of the operations in FIG. 7a may be the same or similar to at least some of the operations in FIG. 4 and FIG. 5. The operations in FIG. 7a may be performed organically with the operations in FIG. 4 and FIG. 5.

Referring to FIG. 7a and FIG. 7b, it can be understood that the at least one action is based on a identification of at least one event of the electronic device 101, such as an event indicating that a change in input power (e.g., input voltage and/or input current) of the charger 303 is required.

Referring to FIG. 7a, in operation 701, according to an embodiment, the electronic device 101 (for example, the processor 120) may charge the battery 189 based on an input power (e.g., input current and/or input voltage) input to the charger 303. For example, referring to FIG. 7b, according to an embodiment, the electronic device 101 (e.g., processor 120) may charge the battery 189 based on an input power (e.g., input current and/or input voltage) input to the charger 303, prior to t=t1. The input current (e.g., I3 (e.g., 1.2[A])) and input voltage (e.g., V2 (e.g., 5[V])) prior to t=t1 of FIG. 7 may correspond to a first target charge power, or may correspond to a second target charge power that is less than the first target charge power. For example, the input current (e.g., 13) and input voltage (e.g., V2) before t=t1 of FIG. 7 may correspond to the input current and input voltage of the operation 401 of FIG. 4. For example, the input current (e.g., I3) and input voltage (e.g., V2) before t=t1 of FIG. 7 may correspond to the input current and input voltage of the operation 501 of FIG. 5. For example, the input current (e.g., I3) and input voltage (e.g., V2) before t=t1 of FIG. 7 may correspond to the input current and input voltage of the operation 505 of FIG. 5.

In operation 703, according to an embodiment, the electronic device 101 (for example, the processor 120) may identify that the input voltage of the charger 303 decreases. For example, referring to FIG. 7b, according to an embodiment, the electronic device 101 (e.g., processor 120) may identify that the input voltage of the charger 303 decreases from t=t1 to t=t2. From t=t1 to t=t2, the input voltage of the charger 303 may be reduced by the electronic device 101 or may be reduced due to a change in the charging environment.

In operation 705, according to an embodiment, the electronic device 101 (for example, the processor 120) may identify at least one event (e.g., an event indicating that a change in input power (e.g., input voltage and/or input current) of the charger 303 is required). For example, referring to FIG. 7b, according to an embodiment, the electronic device 101 (e.g., processor 120) may identify, at t=t2, at least one event (e.g., an event indicating that a change in input power (e.g., input voltage and/or input current) of the charger 303 is required). For example, the electronic device 101 may identify that, at t=t2, the input voltage of the charger 303 has decreased below a reference voltage (e.g., V1 (e.g., 4.6[V])).

In operation 707, according to an embodiment, the electronic device 101 (for example, the processor 120) may perform at least one operation to change the input power (e.g., input voltage and/or input current) of the charger 303 in response to identifying at least one event (e.g., an event indicating that a change in the input power (e.g., input voltage and/or input current) of the charger 303 is required). For example, referring to FIG. 7b, according to an embodiment, the electronic device 101 (e.g., processor 120) may, at t=t3 after t=t2, perform at least one operation to change the input power (e.g., input voltage and/or input current) of the charger 303 in response to identifying at least one event (e.g., an event indicating that a change in the input power (e.g., input voltage and/or input current) of the charger 303 is required) at t=t2. For example, referring to FIG. 4, the at least one operation for changing the input power (e.g., input voltage and/or input current) of the charger 303 may be the at least one operation for increasing the input voltage of the charger 303. For example, referring to FIG. 5, the at least one action for changing the input power (e.g., input voltage and/or input current) of the charger 303 may be the at least one operation for performing an adaptive input current limit function, and/or the at least one action for increasing the input voltage of the charger 303. For example, as shown in FIG. 7, according to an embodiment, the electronic device 101 (e.g., processor 120) may, in response to identifying at least one event (e.g., an event indicating that a change in input power (e.g., input voltage and/or input current) of the charger 303 is required) at t=t2, perform at least one operation to increase the input voltage of the charger 303 at t=t3 after t=t2. For example, as shown in FIG. 7, according to an embodiment, the electronic device 101 (e.g., processor 120) may, in response to identifying at least one event (e.g., an event indicating that a change in input power (e.g., input voltage and/or input current) of the charger 303 is required) at t=t2, provide a request to an external device (e.g., the wired charging device 210 or wireless charging device 220 of FIG. 2) to increase the input voltage to V3 (e.g., 9[V]). For example, as shown in FIG. 6, according to an embodiment, the electronic device 101 (e.g., processor 120) may perform at least one operation to increase the input voltage of the charger 303 at t=t6, after performing at least one operation to perform the adaptive input current limit function at t=t3, in response to determining at least one event (e.g., an event indicating that a change in the input power (e.g., input voltage and/or input current) of the charger 303 is required) at t=t2.

It may be understood by those skilled in the art that embodiments described in this specification can be mutually and organically applied within an applicable range. For example, it may be understood by those skilled in the art that at least some operations of an embodiment described in this specification can be omitted and applied, and at least some operations of an embodiment and at least some operations of another embodiment can be organically combined and applied.

According to an embodiment, the electronic device 101 includes the memory (130) storing a program including instructions, the battery 189, the charger 303 for charging the battery 189, the power circuit 310 configured to provide power to the charger 303, and the controller 120. The instructions, when executed by the controller (120), cause the electronic device (101) to identify a first input current and a first input voltage to be input into the charger 303 on the basis of information on a target charging power for the battery 189. The instructions, when executed by the controller (120), cause the electronic device (101) to control the power circuit 310 such that, based on power provided from an external device (210 or 220), the first input voltage and the first input current are provided to the charger 303. The instructions, when executed by the controller (120), cause the electronic device (101) to control the charger 303 to provide charging power corresponding to the target charging power to the battery (189) based on power provided from the power circuit (310). The instructions, when executed by the controller (120), cause the electronic device (101) to, while the battery (189) is charged based on the charging power provided from the charger (303), provide, based on identifying a decrease of an input voltage of the charger (303) to a reference voltage or lower, a request to the external device (210; 220) for increasing the input voltage of the charger (303) to a voltage greater than the first input voltage.

In such an embodiment, by executing the step of checking whether an increase of the input voltage is possible, improved charging performance can be achieved. When the input current is decreased because of the detection of at least one event, a loss of charging power can be minimized or entirely avoided by increasing the input voltage.

The term to "identify" at least one event (e.g., the input voltage decreases to be the reference voltage or lower) can be understood as detecting values parameters that meet predetermined conditions which are associated with a step of reducing the input current. In other words, a test is carried out to check whether conditions are present that are associated with reducing the input current.

According to an embodiment, the instructions, when executed by the controller (120), may cause the electronic device (101) to identify the target charging power as a first target charging power. The instructions, when executed by the controller (120), may cause the electronic device (101) to identify the first input voltage as a first voltage on the basis of the first target charging power. The instructions, when executed by the controller (120), may cause the electronic device (101) to identify the target charging power as a second target charging power lower than the first target charging power on the basis of a need to decrease of the target charging power. The instructions, when executed by the controller (120), may cause the electronic device (101) to identify the first input voltage as a second voltage lower than the first voltage on the basis of the second target charging power.

In such an embodiment, a safe charging process can be guaranteed by reducing the charging power if a need to reduce the charging power is detected. The charging power can be reduced by reducing the charging voltage. The reduction of the charging power may be temporal, for example until no need to reduce the charging power is detected anymore. The term to "identify" a target charging power as a first target charging power can be understood as setting the target charging power to be the first target charging power.

According to an embodiment, after identifying the first input voltage as the second voltage, the instructions, when executed by the controller (120), may cause the electronic device (101) to, after configuring the first input voltage as the second voltage, reduce an input current of the charger (303) based on the identification of the decrease of the input voltage of the charger (303) to the reference voltage or lower. In such an embodiment, if at least one event is detected after the input voltage has already been decreased, the input current can also be decreased. By reducing the input voltage and/or the input current, a temperature of the electronic device 101 and/or the charger 303 can be controlled and kept below a threshold which may be set to guarantee safe operation of the electronic device and the charger 303.

According to an embodiment, the instructions, when executed by the controller (120), may cause the electronic device (101) to, after reducing the input current based on the identification of the decrease of the input voltage of the charger (303) to the reference voltage or lower, provide the request to the external device (210; 220) for increasing the input voltage of the charger (303) to the voltage greater than the first input voltage.

In such an embodiment, the reduction of the charging power can be kept to a minimum, the increase of the input voltage may compensate or at least partially compensate for the decrease in charging power caused by the reduction of the input current. The duration of the charging process can thus be decreased. The controller 120 may be configured to check whether the increase of the input voltage is possible continuously or repeatedly in a set time interval.

According to an embodiment, after increasing the input voltage, the instructions, when executed by the controller (120), may cause the electronic device (101) to control the input current limit to match the target charging power after providing the request to the external device (210; 220) for increasing the input voltage of the charger (303) to the voltage greater than the first input voltage.

In such an embodiment, the charging power can be kept stable even if there is at least one event if it is detected that it is possible to increase the input voltage sufficiently to achieve the desired charging power.

According to an embodiment, the instructions, when executed by the controller (120), may cause the electronic device (101) to identify the charging protocol of the electronic device 101. The instructions, when executed by the controller (120), may cause the electronic device (101) to identify the information on the target charging power on the basis of the charging protocol.

According to an embodiment, the instructions, when executed by the controller (120), may cause the electronic device (101) to identify the charging protocol according to a charging type of the external devices 210 and 220 transmitting power to the electronic device 101.

According to an embodiment, the instructions, when executed by the controller (120), may cause the electronic device (101) to identify based on the charging protocol whether the increase of the input voltage is possible.

In such an embodiment, the charging device, and especially the type of the charging device, may be incorporated in the decision-making. Specifically, the type of the charging device or the type of the charger 303 can be used to identify a target charging power. This target charging power can in turn be used to determine an input current and an input voltage and, especially, a suitable combination of an input current and an input voltage to achieve a safe and efficient charging process. The term to "identify" a charging protocol of the electronic device 101can be understood as to determine a charging protocol of the electronic device 101.

According to an embodiment, the instructions, when executed by the controller (120), may cause the electronic device (101) to identify a temperature of the electronic device 101. As the temperature increases to a reference temperature or higher, the instructions, when executed by the controller (120), may cause the electronic device (101) to identify at least one event. The instructions, when executed by the controller (120), may cause the electronic device (101) to provide the request to the external device (210; 220) for increasing the input voltage of the charger (303) to the voltage greater than the first input voltage based on the identification of the at least one event.

In such an embodiment, the safety of the charging process can be ensured by controlling a temperature of the electronic device 101. Waste heat resulting from the charging process may lead to an increasing temperature of the electronic device 101, which may cause damage to the electronic device 101. By controlling the temperature and by taking countermeasures, such an increase in temperature and/or damage to the electronic device 101 can be avoided.

According to an embodiment, if the input voltage decreases to be a reference voltage or lower, the instructions, when executed by the controller (120), may cause the electronic device (101) to identify at least one event. In such an embodiment, it may be detected that the power source may not be able to stably supply the desired charging power. If a decrease of the input voltage is detected, the input current may be decreased to stabilize the input voltage or to increase the input voltage again.

According to an embodiment, a method of operating the electronic device 101 includes an operation of identifying a first input current and a first input voltage to be input into the charger 303 of the electronic device 101 on the basis of information on a target charging power for the battery 189 of the electronic device 101. The method includes an operation of controlling the power circuit 310 such that, based on power provided from an external device 210 or 220, the first input voltage and the first input current are provided to the charger 303. The method includes an operation of controlling the charger 303 to provide charging power corresponding to the target charging power to the battery (189) based on power provided from the power circuit (310). The method includes, while the battery 189 is charged based on the charging power provided from the charger (303), providing, based on identifying a decrease of an input voltage of the charger (303) to a reference voltage or lower, a request to the external device (210; 220) for increasing the input voltage of the charger (303) to a voltage greater than the first input voltage.

In such an embodiment, by executing the step of checking whether an increase of the input voltage is possible, improved charging performance can be achieved. When the input current is decreased because of the detection of at least one event, a loss of charging power can be minimized or entirely avoided by increasing the input voltage.

According to an embodiment, the operation of identifying the first input current and the first input voltage may include an operation of identifying the target charging power as a first target charging power. The operation of identifying the first input current and the first input voltage may include an operation of identifying the first input voltage as a first voltage on the basis of the first target charging power. The operation of identifying the first input current and the first input voltage may include an operation of identifying the target charging power as a second target charging power lower than the first target charging power on the basis of a need to reduce the target charging power. The operation of identifying the first input current and the first input voltage may include an operation of identifying the first input voltage as a second voltage lower than the first voltage, based on the second target charging power.

In such an embodiment, a safe charging process can be guaranteed by reducing the charging power if a need to reduce the charging power is detected. The charging power can be reduced by reducing the charging voltage. The reduction of the charging power may be temporal, for example until no need to reduce the charging power is detected anymore.

According to an embodiment, the method may include an operation of, after configuring the first input voltage as the second voltage, reducing an input current of the charger (303) based on the identification of the decrease of the input voltage of the charger (303) to the reference voltage or lower. In such an embodiment, if at least one event is detected after the input voltage has already been decreased, the input current can also be decreased. By reducing the input voltage and/or the input current, a temperature of the electronic device 101 and/or the charger 303 can be controlled and kept below a threshold which may be set to guarantee safe operation of the electronic device and the charger 303.

According to an embodiment, the operation of providing the request to the external device (210; 220) for increasing the input voltage of the charger (303) to the voltage greater than the first input voltage may include, providing the request to the external device (210; 220) for increasing the input voltage of the charger (303) to the voltage greater than the first input voltage after reducing the input current based on the identification of the decrease of the input voltage of the charger (303) to the reference voltage or lower.

In such an embodiment, the reduction of the charging power can be kept to a minimum, the increase of the input voltage may compensate or at least partially compensate for the decrease in charging power caused by the reduction of the input current. The duration of the charging process can thus be decreased. The controller 120 may be configured to check whether the increase of the input voltage is possible continuously or repeatedly in a set time interval.

According to an embodiment, the method may include the operation of controlling an input current limit to match the target charging power after providing the request to the external device (210; 220) for increasing the input voltage of the charger (303) to the voltage greater than the first input voltage. In such an embodiment, the charging power can be kept stable even if there is at least one event if it is detected that it is possible to increase the input voltage sufficiently to achieve the desired charging power.

According to an embodiment, the method may include an operation of identifying a charging protocol of the electronic device 101. The method may include an operation of identifying the information on the target charging power on the basis of the charging protocol.

According to an embodiment, the operation of identifying the charging protocol of the electronic device 101 may include an operation of identifying the charging protocol according to a charging type of the external device 210 or 220 transmitting power to the electronic device 101.

According to an embodiment, the method may include an operation of identifying based on the charging protocol whether the increase of the input voltage is possible. In such an embodiment, the charging device, and especially the type of the charging device, may be incorporated in the decision-making. Specifically, the type of the charging device or the type of the charger 303 can be used to identify a target charging power. This target charging power can in turn be used to determine an input current and an input voltage and, especially, a suitable combination of an input current and an input voltage to achieve a safe and efficient charging process.

According to an embodiment, the method may include an operation of identifying a temperature of the electronic device 101. The method may include an operation of identifying the at least one event according to an increase of the temperature to a reference temperature or higher. The method may include an operation of providing the request to the external device (210; 220) for increasing the input voltage of the charger (303) to the voltage greater than the first input voltage based on the identification of the at least one event.In such an embodiment, the safety of the charging process can be ensured by controlling a temperature of the electronic device 101. Waste heat resulting from the charging process may lead to an increasing temperature of the electronic device 101, which may cause damage to the electronic device 101. By controlling the temperature and by taking countermeasures, such an increase in temperature and/or damage to the electronic device 101 can be avoided.

According to an embodiment, the method may include an operation of identifying the at least one event according to a decrease of the input voltage to a reference voltage or lower. In such an embodiment, it may be detected that the power source may not be able to stably supply the desired charging power. If a decrease of the input voltage is detected, the input current may be decreased to stabilize the input voltage or to increase the input voltage again.

According to an embodiment, a computer-readable recording medium storing instructions causing the controller 120 of the electronic device 101 to perform at least one operation is provided. The at least one operation may include an operation of identifying a first input current and a first input voltage to be input into the charger 303 of the electronic device 101 on the basis of information on a target charging power for the battery 189 of the electronic device 101. The at least one operation includes an operation of controlling the power circuit 310 such that, based on power provided from an external device 210 or 220, the first input voltage and the first input current are provided to the charger 303. The at least one operation includes an operation of controlling the charger 303 to provide charging power corresponding to the target charging power to the battery (189) based on power provided from the power circuit (310). The at least one operation includes, while the battery 189 is charged based on the charging power provided from the charger (303), providing, based on identifying a decrease of an input voltage of the charger (303) to a reference voltage or lower, a request to the external device (210; 220) for increasing the input voltage of the charger (303) to a voltage greater than the first input voltage.

According to an embodiment, the operation of identifying the first input current and the first input voltage may include an operation of identifying the target charging power as a first target charging power. The operation of identifying the first input current and the first input voltage may include an operation of identifying the first input voltage as a first voltage on the basis of the first target charging power. The operation of identifying the first input current and the first input voltage may include an operation of identifying the target charging power as a second target charging power lower than the first target charging power on the basis of a need to reduce the target charging power. The operation of identifying the first input current and the first input voltage may include an operation of identifying the first input voltage as a second voltage lower than the first voltage, based on the second target charging power.

According to an embodiment, the at least one operation may include an operation of, after configuring the first input voltage as the second voltage, reducing an input current of the charger (303) based on the identification of the decrease of the input voltage of the charger (303) to the reference voltage or lower. In such an embodiment, if at least one event is detected after the input voltage has already been decreased, the input current can also be decreased. By reducing the input voltage and/or the input current, a temperature of the electronic device 101 and/or the charger 303 can be controlled and kept below a threshold which may be set to guarantee safe operation of the electronic device and the charger 303.

According to an embodiment, the operation of providing the request to the external device (210; 220) for increasing the input voltage of the charger (303) to the voltage greater than the first input voltage may include, providing the request to the external device (210; 220) for increasing the input voltage of the charger (303) to the voltage greater than the first input voltage after reducing the input current based on the identification of the decrease of the input voltage of the charger (303) to the reference voltage or lower.

According to an embodiment, the at least one operation may include the operation of controlling an input current limit to match the target charging power after providing the request to the external device (210; 220) for increasing the input voltage of the charger (303) to the voltage greater than the first input voltage.

According to an embodiment, the at least one operation may include an operation of identifying a charging protocol of the electronic device 101. The at least one operation may include an operation of identifying the information on the target charging power on the basis of the charging protocol.

According to an embodiment, the operation of identifying the charging protocol of the electronic device 101 may include an operation of identifying the charging protocol according to a charging type of the external device 210 or 220 transmitting power to the electronic device 101.

According to an embodiment, the at least one operation may include an operation of identifying based on the charging protocol whether the increase of the input voltage is possible.

According to an embodiment, the at least one operation may include an operation of identifying a temperature of the electronic device 101. The at least one operation may include an operation of identifying the at least one event according to an increase of the temperature to a reference temperature or higher. The at least one operation may include an operation of providing the request to the external device (210; 220) for increasing the input voltage of the charger (303) to the voltage greater than the first input voltage based on the identification of the at least one event.

According to an embodiment, the at least one operation may include an operation of identifying the at least one event according to a decrease of the input voltage to a reference voltage or lower.

Of course, all of the advantages and further details of possible embodiments mentioned above with respect to the described electronic device and/or the method of operating an electronic device as described above apply to the instructions stored on a computer-readable medium.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element. According to embodiments, each component of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components may be integrated into a single component. In such a case, the integrated component may still perform one or more functions of each of the plurality of components in the same or similar manner as they are performed by a corresponding one of the plurality of components before the integration. According to embodiments, operations performed by the component may be carried out sequentially, in parallel, repeatedly, or heuristically, or one or more of the operations may be executed in a different order or omitted, or one or more other operations may be added.

## Claims

1. An electronic device (101) comprising:
a memory (130) storing a program including instructions;
a battery (189);
a charger (303) configured to charge the battery (189);
a power circuit (310) configured to provide power to the charger (303); and
controller (120),
wherein the instructions, when executed by the controller (120), cause the electronic device (101) to:
identify a first input current and a first input voltage to be input into the charger (303), based on information on a target charging power for the battery (189);
control the power circuit (310) such that, based on power provided from an external device (210; 220), the first input voltage and the first input current are provided to the charger (303);
control the charger (303) to provide charging power corresponding to the target charging power to the battery (189) based on power provided from the power circuit (310);
while the battery (189) is charged based on the charging power provided from the charger (303), provide, based on identifying a decrease of an input voltage of the charger (303) to a reference voltage or lower, a request to the external device (210; 220) for increasing the input voltage of the charger (303) to a voltage greater than the first input voltage.

2. The electronic device (101) of claim 1, wherein the instructions, when executed by the controller (120), cause the electronic device (101) to:
identify the target charging power as a first target charging power;
identify the first input voltage as a first voltage, based on the first target charging power;
identify the target charging power as a second target charging power lower than the first target charging power based on a need to reduce the target charging power; and
identify the first input voltage as a second voltage lower than the first voltage based on the second target charging power.

3. The electronic device (101) of claim 2, wherein the instructions, when executed by the controller (120), cause the electronic device (101) to:
after configuring the first input voltage as the second voltage, reduce an input current of the charger (303) based on the identification of the decrease of the input voltage of the charger (303) to the reference voltage or lower.

4. The electronic device (101) of one of claims 1 to 3, wherein the instructions, when executed by the controller (120), cause the electronic device (101) to:
after reducing the input current based on the identification of the decrease of the input voltage of the charger (303) to the reference voltage or lower, provide the request to the external device (210; 220) for increasing the input voltage of the charger (303) to the voltage greater than the first input voltage.

5. The electronic device (101) of one of claims 1 to 4, wherein the instructions, when executed by the controller (120), cause the electronic device (101) to control an input current limit to match the target charging power after providing the request to the external device (210; 220) for increasing the input voltage of the charger (303) to the voltage greater than the first input voltage.

6. The electronic device (101) of one of claims 1 to 5, wherein the instructions, when executed by the controller (120), cause the electronic device (101) to:
identify a charging protocol of the electronic device (101) based on a charging type of the external device (210 or 220) transmitting power to the electronic device (101); and
identify the information on the target charging power, based on the charging protocol.

7. The electronic device (101) of one of claims 1 to 6, wherein the instructions, when executed by the controller (120), cause the electronic device (101) to identify based on the charging protocol whether the increase of the input voltage is possible.

8. A method of operating an electronic device (101), the method comprising:
identifying a first input current and a first input voltage to be input into a charger (303) of the electronic device (101), based on information on a target charging power for a battery (189) of the electronic device (101);
controlling the power circuit (310) such that, based on power provided from an external device (210; 220), the first input voltage and the first input current are provided to the charger (303);
controlling the charger (303) to provide charging power corresponding to the target charging power to the battery (189) based on power provided from the power circuit (310);
while the battery (189) is charged based on the charging power provided from the charger (303), providing, based on identifying a decrease of an input voltage of the charger (303) to a reference voltage or lower, a request to the external device (210; 220) for increasing the input voltage of the charger (303) to a voltage greater than the first input voltage.

9. The method of claim 8, wherein the configuring of the first input current and the first input voltage comprises:
identifying the target charging power as a first target charging power;
configuring the first input voltage as a first voltage, based on the first target charging power;
identifying the target charging power as a second target charging power lower than the first target charging power, based on a need to reduce the target charging power; and
configuring the first input voltage as a second voltage lower than the first voltage based on the second target charging power.

10. The method of claim 9, further comprising, after configuring the first input voltage as the second voltage, reducing an input current of the charger (303) based on the identification of the decrease of the input voltage of the charger (303) to the reference voltage or lower.

11. The method of one of claims 8 to 10, wherein the providing the request to the external device (210; 220) for increasing the input voltage of the charger (303) to the voltage greater than the first input voltage comprises, providing the request to the external device (210; 220) for increasing the input voltage of the charger (303) to the voltage greater than the first input voltage after reducing the input current based on the identification of the decrease of the input voltage of the charger (303) to the reference voltage or lower.

12. The method of one of claims 8 to 11, further comprising controlling an input current limit to match the target charging power after providing the request to the external device (210; 220) for increasing the input voltage of the charger (303) to the voltage greater than the first input voltage.

13. The method of one of claims 8 to 12, further comprising:
identifying a charging protocol of the electronic device (101); and
identifying the information on the target charging power, based on the charging protocol.

14. The method of one of claims 8 to 13, wherein the identifying of the charging protocol of the electronic device (101) comprises identifying the charging protocol according to a charging type of the external device (210; 220) transmitting power to the electronic device (101).

15. The method of one of claims 8 to 14, further comprising identifying based on the charging protocol whether the increase of the input voltage is possible.
